Europäisches Patentamt

European Patent Office

Office européen des brevets

(19)

(11) Numéro de publication : **0 366 509 B1**

(12)

# FASCICULE DE BREVET EUROPEEN

(45) Date de publication du fascicule du brevet :
**15.04.92 Bulletin 92/16**

(51) Int. Cl.$^5$ : **F16D 55/224**

(21) Numéro de dépôt : **89402718.4**

(22) Date de dépôt : **03.10.89**

(54) **Frein à deux disques d'écartement fixe.**

(30) Priorité : **28.10.88 FR 8814120**

(43) Date de publication de la demande :
**02.05.90 Bulletin 90/18**

(45) Mention de la délivrance du brevet :
**15.04.92 Bulletin 92/16**

(84) Etats contractants désignés :
**DE FR GB IT**

(56) Documents cités :
**DE-A- 2 141 857**
**FR-A- 2 232 702**
**FR-A- 2 515 758**
**FR-A- 2 582 365**
**GB-A- 2 009 345**

(73) Titulaire : **BENDIX EUROPE Services
Techniques S.A.
126 rue de Stalingrad
F-93700 Drancy (FR)**

(72) Inventeur : **Thioux, Alain Bendix France
126 Rue de Stalingrad
F-93700 Drancy (FR)**

Jouve, 18, rue Saint-Denis, 75001 PARIS

EP 0 366 509 B1

**Description**

La présente invention concerne un frein à deux disques d'écartement fixe.

Les freins à disque unique présentent une limite intrinsèque en ce que le disque comporte uniquement deux surfaces de friction.

On sait surmonter cette limite en multipliant le nombre des disques. Cependant, dans la plupart des cas, ce type de freins multidisques comprend un empilage de disques et de couronnes de friction alternés solidaires en rotation, mais libres en translation par rapport à un axe tournant et par rapport à un cylindre fixe, respectivement.

Ces freins complexes et coûteux sont réservés, en pratique courante, à l'aéronautique.

Dans le cas des véhicules automobiles de grande diffusion, on cherche, au contraire, à réaliser des freins à la fois simples et économiques, dont l'entretien et la maintenance peuvent être assurés au moindre coût.

La base d'une solution consiste à réaliser un frein à deux disques d'écartement fixe, évitant ainsi les problèmes inhérents aux freins précités à disques coulissants. Le montage fixe de deux disques parallèlement l'un à l'autre pose en effet très peu de difficultés.

Par contre, le problème principal réside dans l'agencement et la commande des deux paires d'éléments de friction et des organes de support qui leur sont associés.

Dans le document FR-A-2 515 758, on a proposé un frein à deux disques d'écartement fixe comportant un support fixe commun à deux étriers et qui s'étend suivant un secteur angulaire d'environ 180°. Les deux étriers sont constitués par des pièces en forme de cavaliers engagées coulissantes axialement dans des moyens de guidage du support fixe commun circonférentiellement l'un à la suite de l'autre, têtebêche, les moteurs hydrauliques associés aux deux étriers se trouvant de part et d'autre de la paire de disques.

Les inconvénients d'un tel frein sont nombreux: il a un encombrement axial important. De plus il nécessite pour son fonctionnement un espace important pour tenir compte du recul des étriers lorsque les garnitures ont atteint leur maximum d'usure tolérable. Enfin, la chape et les étriers recouvrent les disques sur plus de la moitié de leur surface, ce qui est préjudiciable à leur ventilation et à leur refroidissement.

L'entretien d'un tel frein présente aussi des inconvénients : le montage de tous les éléments mobiles du frein en coulissement sur des glissières transversales pose d'autres problèmes bien connus de l'homme de métier : corrosion des surfaces de coulissement, blocage par arc-boutement en cas de mise en biais, difficulté de démonter le frein ne serait-ce que pour remplacer les plaquettes porte-garnitures de friction.

La présente invention vise à remédier à ces inconvénients grâce à un frein à disques pour véhicule automobile, comprenant une paire de disques rotatifs, respectivement intérieur et extérieur, fixés l'un à l'autre et à écartement fixe, deux paires d'éléments de friction, une paire extérieure et une paire intérieure respectivement destinées à venir en engagement de friction avec les faces opposées des deux disques, extérieur et intérieur respectivement, et des organes de support et de commande destinés à appliquer des éléments de friction des deux paires contre leur disque respectif et à encaisser le couple de freinage résultant, le frein comprenant une chape support s'étendant à la fois du côté intérieur du disque intérieur, dans l'intervalle entre les deux disques, et du côté extérieur du disque extérieur, un premier étrier de serrage, dit étrier intérieur, coopérant avec la paire intérieure d'éléments de friction, et un second étrier de serrage, dit étrier extérieur, coopérant avec la paire extérieure d'éléments de friction, les deux étriers étant montés coulissants dans la chape support, l'étrier intérieur comportant un corps en forme de U inversé, dont la base chevauche le disque intérieur et présente un aile extérieure descendant dans l'intervalle entre les deux disques et prenant contact avec l'élément de friction extérieur de la paire d'éléments de friction intérieurs, et une aile intérieure, descendant du côté intérieur du disque intérieur, formant un cylindre, recevant un piston en contact avec l'élément de friction intérieur de la paire d'éléments de friction intérieurs.

Conformément à l'invention, l'étrier extérieur comporte un corps en forme de U inversé, dont la base chevauche les deux disques et présentant une aile extérieure descendant à l'extérieur du disque extérieur et prend contact avec l'élément de friction extérieur de la paire d'éléments de friction extérieurs, et une aile intérieure descendant à l'intérieur du disque intérieur, formant un cylindre recevant un piston, et l'étrier comprenant une entretoise en forme de U inversé, dont la base chevauche le disque intérieur dans un intervalle radial séparant la périphérie du disque intérieur et la base de l'étrier, et présentant une aile intérieure descendant du côté intérieur du disque intérieur pour prendre contact avec le piston et une aile extérieure descendant dans l'intervalle entre les deux disques pour prendre contact avec l'élément de friction intérieur de la paire d'éléments de friction extérieurs.

Les détails et avantages de l'invention apparaîtront clairement à la lecture de la description qui va suivre, en se référant aux dessins annexés, dans lesquels:

– la Figure 1 est une vue latérale d'un frein à disque conforme à un mode de réalisation de l'invention,

– la Figure 2 est une vue de dessus du frein de la Figure 1,
– la Figure 3 est une vue latérale de la chape de frein,
– la Figure 4 est une vue de dessus de la chape de la Figure 3,
– la Figure 5 est une vue en coupe V-V à la Figure 1, et
– la Figure 6 est une vue en coupe VI-VI à la Figure 1.

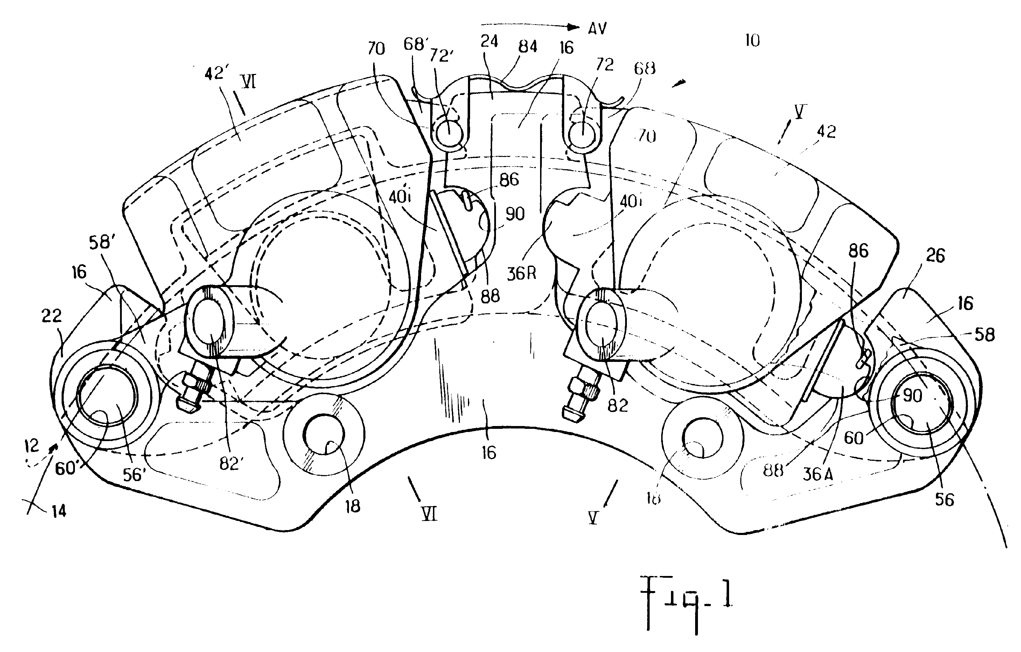

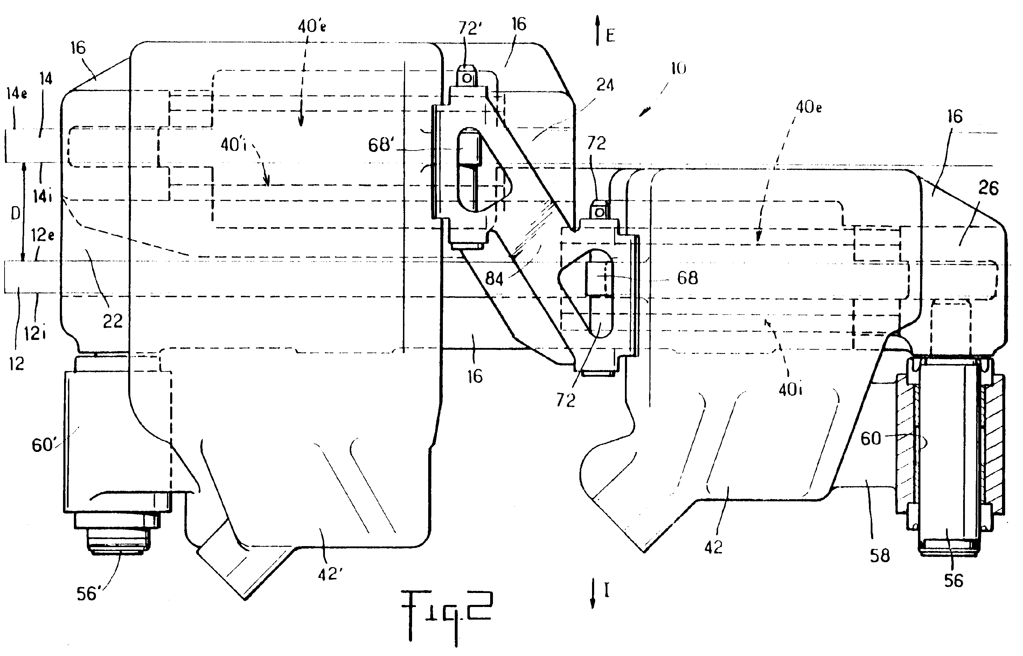

Le frein à disque 10, illustré en vue latérale à la Figure 1 et en vue de dessus à la Figure 2, comporte deux disques fixés à un élément tournant du véhicule, par exemple un arbre de roue, et l'on distingue selon leur position par rapport à l'axe longitudinal du véhicule un disque extérieur 14 situé à proximité de la jante de roue, non représentée, et un disque intérieur 12 opposé au disque extérieur et séparé de ce dernier d'une distance fixe D.

L'intérieur et l'extérieur du frein sont désignés dans les Figures par les flèches I et E respectivement.

Une chape 16 ou élément d'encaissement de couple est fixée à une partie non rotative du véhicule, comme par exemple le porte-fusée de roue, également non représenté, par des vis engagées dans des taraudages 18 de la chape.

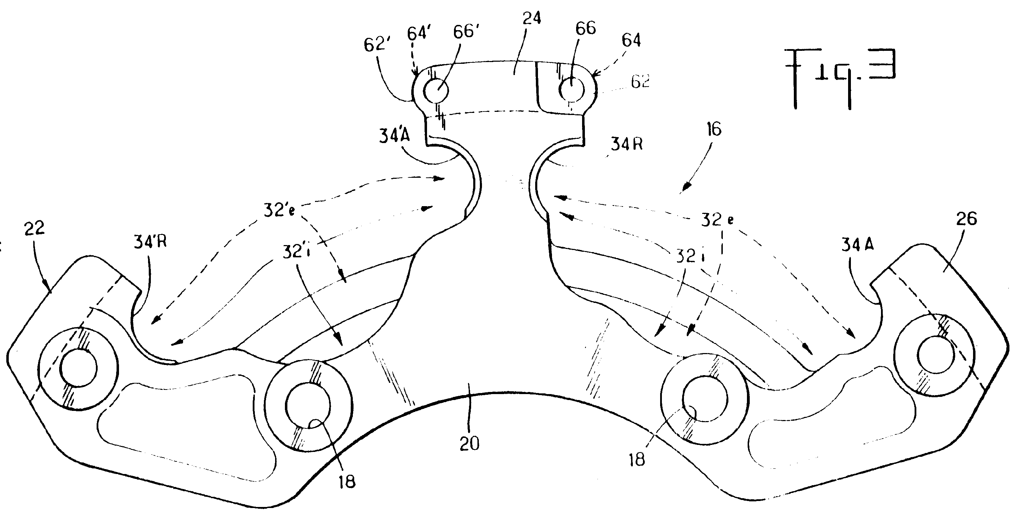

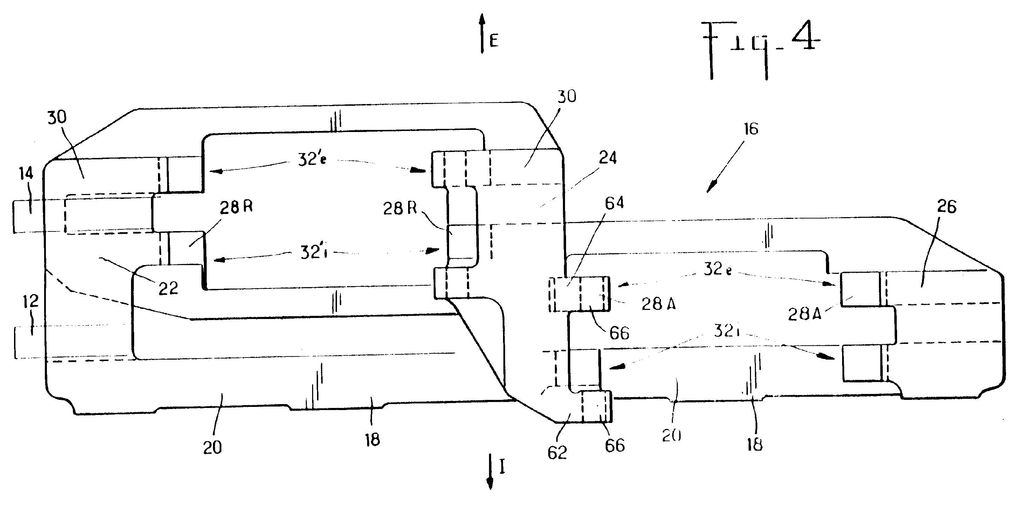

Cette chape 16 est formée d'une seule pièce et se décompose en plusieurs parties :
– une partie intérieure 20 (Figure 3) de forme sensiblement plane et s'étendant sensiblement parallèlement aux disques, du côté intérieur du disque intérieur,
– trois parties formant pont, 22, 24, 26 (Figure 4) chevauchant la périphérie des disques, le premier pont 22, dit gauche et situé à gauche à la Figure, chevauche les deux disques et s'étend jusqu'au-delà du disque extérieur ; le deuxième pont 24, dit central et situé au centre s'étend également jusqu'au-delà du disque extérieur 14, tandis que le troisième pont 26, dit droit et situé à droite à la Figure, chevauche le disque intérieur 12 et s'arrête avant le disque extérieur 14,
– une partie intermédiaire 28 (Figure 4) sensiblement plane attachée aux trois ponts 22, 24, 26 et plongeant dans l'intervalle D séparant les deux disques 12, 14,
– une partie extérieure 30 sensiblement plane attachée aux deux premiers ponts 22, 24 et s'étendant sensiblement parallèlement au disque extérieur, à l'extérieur de celui-ci.

Les parties de la chape 16 comportent un certain nombre d'ouvertures destinées à loger des éléments de friction.

Plus précisément, la partie intérieure 20 de chape comporte, entre le pont central 24 et le pont de droite 26, une ouverture 32i bordée à droite et à gauche, dans le sens de rotation, par deux entailles semi-circulaires 34A, 34R destinées à recevoir des oreilles semi-circulaires 36A, 36R également ménagées sur les deux bords des éléments de friction.

Les éléments de friction 40 sont bien connus dans le métier et ne seront pas décrits en détail. Ils se composent d'une plaque support métallique, sur laquelle est fixé un bloc de matériau de friction ou garniture destiné à venir en engagement de friction avec l'une des faces du disque.

Ainsi, l'ouverture 32i de la partie intérieure 20 de chape reçoit un élément de friction 40i en regard de la face 12i intérieure du disque intérieur 12.

La partie intermédiaire 28 de chape est composée de deux éléments plans 28R, 28A successifs reliés entre eux et décalés, le premier élément 28R, entre les premier et deuxième ponts 22, 24, étant rapproché de la face intérieure 14i du disque extérieur 14 et le second élément 28A, entre les deuxième 24 et troisième 26 ponts, étant rapproché de la face extérieure 12e du disque intérieur 12.

Le second élément 28A de la partie intermédiaire de chape comporte une ouverture 32e analogue à celle de la partie intérieure de chape, destinée à recevoir un élément de friction 40e en regard de la face extérieure 12e du disque intérieur 12, les deux éléments de friction 40i et 40e se faisant face de part et d'autre du disque intérieur 12.

Dans son premier élément plan 28R, la partie intermédiaire de chape comporte une ouverture 32'i, analogue aux ouvertures déjà décrites, destinée à recevoir un élément de friction 40'i en regard de la face intérieure 14i du disque extérieur 14, et la partie extérieure 30 de chape comporte une même ouverture 32'e, destinée à recevoir un élément de friction 40'e en regard de la face extérieure 14e du disque extérieur 14.

Pour appliquer sous pression les éléments de friction sur leurs disques respectifs sont prévus deux étriers de serrage.

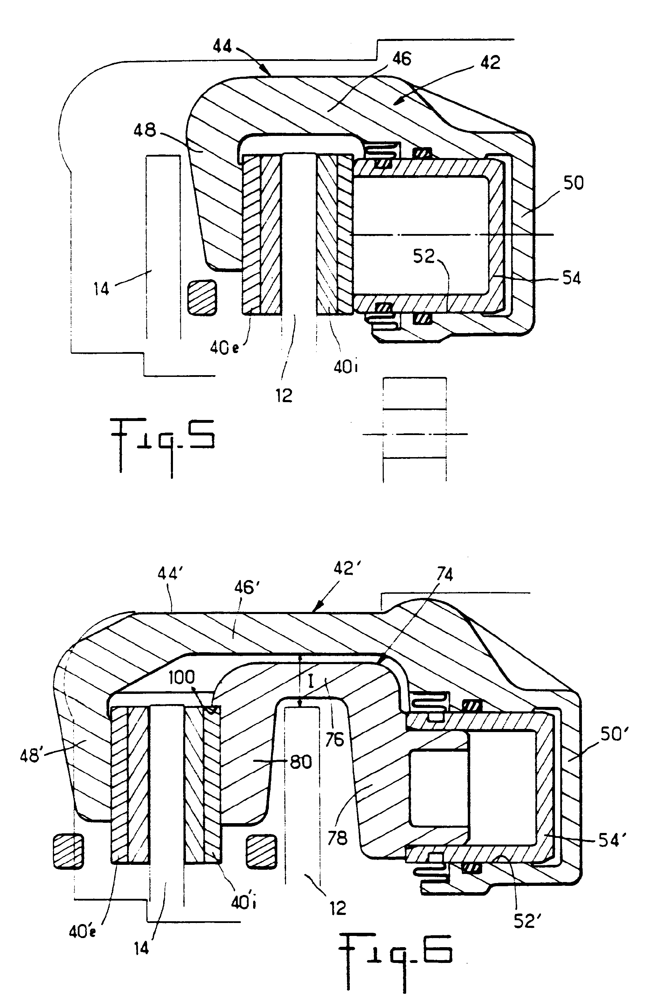

Le premier étrier, situé à droite de la Figure, dit étrier intérieur 42 parce qu'il coopère avec les éléments de friction 40i et 40e de part et d'autre du disque intérieur 12, comprend un corps 44 (Figure 5) en forme de U inversé, dont la base 46 chevauche le disque intérieur 12 et les ailes 48, 50 retombent parallèlement au disque. L'une des ailes 48, dite extérieure, s'étend dans l'intervalle D entre disques, étant appliquée contre la plaque support de l'élément de friction extérieur 40e, tandis que l'aile intérieure 50 forme une chambre cylindrique 52 pour un piston de commande 54, ce dernier étant directement ou indirectement appliqué contre la plaque support de l'élément de friction intérieur 40i. Ainsi, lors de la mise sous pression du cylindre 52, le piston 54 applique un élément de friction 40i contre la face intérieure 12i du disque, tandis que, par réaction à travers l'étrier 42, l'aile extérieure 48 de ce dernier applique l'autre élément de friction 40e contre la face extérieure 12e du disque.

Les efforts tangentiels développés entre le disque 12 et les éléments de friction 40i, 40e sont essentiellement encaissés par la chape 16, du fait que les supports des éléments de friction viennent en butée contre les encoches 34A, 34R prévues à cet effet dans les ouvertures de chape 32i, 32e.

L'étrier 42 est monté coulissant , et occasionnellement basculant par rapport à la chape 16, de la manière suivante: la chape porte, sur un côté de l'étrier 42, une colonnette guide 56, perpendiculaire aux plans des disques, et le corps 46 d'étrier porte une excroissance latérale 58 formant douille 60, enfilée sur la colonnette guide 56. Ainsi, l'étrier 42 peut se déplacer par rapport à la chape 16 au fur et à mesure de l'usure des garnitures de friction, comme bien connu.

De l'autre côté de l'étrier 42, la chape 16 comporte une paire d'oreilles 62, 64 traversées par un perçage 66 perpendiculaire au plan des disques, et l'étrier comporte une saillie latérale 68 dotée d'un perçage 70 correspondant, ou tout au moins d'une entaille alignée avec les perçages des oreilles de chape. Une tige de verrouillage 72 est engagée dans les perçages 66 des oreilles 62, 64 de chape et du perçage 70 ou de l'entaille de l'étrier 42.

L'étrier 42 est ainsi sûrement maintenu avec possibilité de coulissement par rapport à la chape 16. Il peut être également basculé autour de la colonnette 56 afin de dégager les éléments de friction 40i, 40e pour leur inspection ou leur remplacement. Il suffit pour ce faire d'extraire la tige de verrouillage 72 à l'opposé de la colonnette 56.

De l'autre côté, à gauche à la Figure, le frein comporte un second étrier, dit étrier extérieur 42', destiné à appliquer les éléments de friction 40'e et 40'i sur le disque extérieur.

Conformément à l'invention, la structure de l'étrier extérieur 42' est en forme de U inversé, dont la base 46' (Figure 6) chevauche les deux disques. L'aile extérieure 48' descend au-delà du disque extérieur 14 et s'appuie contre un élément de friction 40'e, tandis que l'aile intérieure 50' descend du côté intérieur du disque intérieur 12, en formant également un cylindre 52' recevant un piston moteur 54'.

Outre la différence de longueur, ce second étrier 42' présente une autre différence par rapport au premier. En effet, afin de transmettre les effort du piston 54' à l'élément de friction 40'i en regard de la face intérieure du disque extérieur 14, cet étrier 42' comporte une entretoise 74 en forme de U inversé également, dont la base 76 chevauche le disque intérieur 12, dans un intervalle radial I libre entre la périphérie de ce disque et la base 46' de l'étrier, dont une aile intérieure 78 descend du côté intérieur du disque intérieur 12 pour venir en contact avec le piston 54', et dont une aile extérieure 80 descend dans l'intervalle D entre les deux disques pour venir en contact avec l'élément de friction 40'i en regard de la face intérieure du disque extérieure 14.

Afin d'éviter la rotation du piston 54' et donc de l'entretoise 74, ce qui pourrait provoquer le frottement de cette dernière sur le disque 12, un logement 100 de forme complémentaire à celle de l'élément de friction 40'i est aménagé sur l'aile extérieure 80 de cette entretoise pour l'indexer par rapport à l'élément de friction 40'i.

Cet étrier 42' est également monté coulissant et basculant par rapport à la chape au moyen d'un ensemble à colonnette 56' et douille 60', et d'une tige de verrouillage 72' traversant des perçages 66' dans des oreilles 62', 64' de la chape 16 et un perçage 70' ou une entaille latérale de l'étrier.

Le frein à disque fonctionne de la manière suivante:

lors d'une application de freinage, du liquide de freinage sous pression est admis simultanément par des orifices d'alimentation 82, 82' dans les deux cylindres 52, 52' des étriers intérieur 42 et extérieur 42'.

Dans l'étrier intérieur 42, le piston 54 repousse l'élément de friction 40i en engagement de friction contre la face intérieure 12i du disque intérieur 12, et, par réaction à travers l'étrier 42, l'aile extérieure 48 de celui-ci repousse l'élément de friction 40e en engagement de friction contre la face extérieure 12e du disque 12.

Dans l'étrier extérieur 42', le piston 54' repousse l'aile intérieure 78 de l'entretoise 74 et cette dernière repousse par son aile extérieure 80 l'élément de friction 40'i en engagement contre la face intérieur 14i du disque extérieur 14, et, par réaction à travers l'étrier 42', l'aile extérieure 48' de celui-ci repousse l'élément de friction 40'e en engagement de friction contre la face extérieure 14e du disque.

On remarquera deux autres particularités du frein qui vient d'être décrit :

Un ressort double 84, maintenu par les tiges de verrouillage 72, 72', prend appui sur le pont central 24 de la chape 16, et sollicite vers l'axe des disques les extrémités 68, 68' des étriers 42, 42' opposées aux colonnettes 56, 56'.

Ce ressort a pour but d'éviter des vibrations des étriers 42, 42' induites par les vibrations du véhicule.

Par ailleurs, les éléments de friction 40 comportent des ressorts 86, dans la zone de leurs excroissances 36A semi-circulaires latérales. Ces ressorts repoussent ces excroissances 36A en direction de l'axe des disques et en arrière afin de déterminer au repos un point de contact latéral inférieur 88 entre les excroissances 36A des éléments de friction et les entailles semi-circulaires 34A, 34'A de la chape qui les reçoivent.

Ces ressorts 86 sont placés aux extrémités 36A des éléments de friction situés en sortie de couple pour des freinages en marche avant (flèche A à la Figure 1). Ainsi, pour chaque freinage en marche avant, les élément de friction 40 se déplacent progressivement le long de la surface intérieure des entailles 34A, 34'A, depuis le point de contact latéral 88 jusqu'à un point de contact frontal 90, et les éléments de friction sont ramenés, au relâchement du freinage, par les ressorts 86 dans leur position de repos en contact latéral 88. Il en résulte un balayage permanent de la surface de contact entre les éléments de friction 40 et la chape 16, qui évite des blocages ou des grippages.

Par réaction, les excroissances opposées 36R sont également maintenues en contact permanent pratiquement frontal avec les entailles opposées 34R, 34'R de la chape. Ceci permet d'éviter des claquements entre les éléments de friction 40 et la chape 16 lors des freinages en marche arrière.

Pour simplifier la fabrication des éléments de friction 40 et leur montage, ils sont tous identiques et symétriques par rapport à un plan radial, il en est de même des ouvertures 32 qui les reçoivent.

On comprendra que les ressorts 86 pourront être remplacés par tout autre ressort déterminant l'application d'une force radiale et d'une force tangentielle sur les éléments de friction, par exemple conformément au brevet FR-A-2 582 365.

Par ailleurs, les colonnettes pourront être placées différemment de la position illustrée aux Figures. Notamment, les deux colonnettes pourront être placées en entrée de couple par rapport aux étriers.

On a ainsi réalisé selon l'invention un frein à deux disques d'écartement fixe dans lequel :
- les deux cylindres des étriers faisant monteurs hydrauliques sont situés du même côté de la paire de disques, ce qui procure au frein un encombrement axial réduit,
- l'implantation du frein selon l'invention peut se réaliser dans un volume réduit puisque lors de l'usure des éléments de friction, les reculs des deux étriers s'effectuent dans la même direction, vers l'intérieur du frein, et en quelque sorte se compensent, alors qu'ils s'ajoutent dans l'art antérieur où les moteurs sont de part et d'autre de la paire de disques,
- les deux cylindres des étriers peuvent être alimentés au moyen d'un double circuit de freinage, ce qui procure une sécurité accrue,
- le décalage angulaire des deux étriers et donc des éléments de friction est moindre que celui de l'art antérieur, ce qui a pour effet de permettre la dissipation calorifique sur une zone plus étendue que dans un frein dans lequel les éléments de friction sont écartés, par exemple celui du document FR-A-2 515 758.

## Revendications

1. Frein à disque pour véhicule automobile, comprenant une paire de disques rotatifs, respectivement intérieur (12) et extérieur (14), fixés l'un à l'autre et à écartement fixe (D), deux paires d'éléments de friction (40i, 40e, 40'i, 40'e), une paire extérieure et une paire intérieure respectivement destinées à venir en engagement de friction avec les faces opposées des deux disques, extérieur et intérieur respectivement, et des organes de support (16) et de commande (42, 42') destinés à appliquer les éléments de friction des deux paires contre leur disque respectif et à encaisser le couple de freinage résultant, le frein comprenant une chape (16) support s'étendant à la fois du côté intérieur du disque intérieur (12), dans l'intervalle (D) entre les deux disques, et du côté extérieur du disque extérieur (14), un premier étrier de serrage (42), dit étrier intérieur, coopérant avec la paire intérieure (40i, 40e) d'éléments de friction, et un second étrier de serrage (42'), dit étrier extérieur, coopérant avec la paire extérieure (40'i, 40'e) d'éléments de friction, les deux étriers (42, 42') étant montés coulissants dans la chape (16) support, l'étrier intérieur (42) comportant un corps (44) en forme de U inversé, dont la base (46) chevauche le disque intérieur (12) et présente une aile extérieure (48) descendant dans l'intervalle (D) entre les deux disques (12, 14) et prenant contact avec l'élément de friction extérieur (40e) de la paire d'éléments de friction intérieurs, et une aile intérieure, descendant du côté intérieur du disque intérieur (12), formant un cylindre (52), recevant un piston (54) en contact avec l'élément de friction intérieur (40i) de la paire d'éléments de friction intérieurs, caractérisé en ce que l'étrier extérieur (42') comporte un corps (44') en forme de U inversé, dont la base (46') chevauche les deux disques (12, 14) et présentant une aile extérieure (48') descendant à l'extérieur du disque extérieur (14) et prend contact avec l'élément de friction extérieur (40'e) de la paire d'éléments de friction extérieurs, et une aile intérieure (50') descendant à l'intérieur du disque intérieur (12), formant un cylindre (52') recevant un piston (54'), et l'étrier (42') comprenant une entretoise (74) en forme de U inversé, dont las base (76) chevauche le disque intérieur (12) dans un intervalle radial (I) séparant la périphérie du disque intérieur (12) et la base (46') de l'étrier, et présentant une aile intérieure descendant du côté intérieur du disque intérieur (12) pour prendre contact avec le piston (54') et une aile extérieure descendant dans l'intervalle (D) entre les deux disques pour prendre contact avec l'élément de friction intérieur (40'i) de la paire d'élément de friction extérieurs.

2. Frein à disque selon la revendication 1, caractérisé en ce qu'un logement (100) de forme complémentaire à celle de l'élément de friction (40'i) de la paire d'éléments de friction extérieurs et aménagé sur l'aile extérieure (80) de l'entretoise (74).

3. Frein à disque selon l'une des revendications 1 ou 2, caractérisé en ce que les deux étriers (42, 42') sont montés coulissants par rapport à la chape au moyen d'un ensemble à colonnettes (56, 56') portées par la chape (16) et douilles (60, 60') portées par les deux étriers (42, 42'), respectivement.

4. Frein à disque selon l'une quelconque des revendications 1 à 3, caractérisé en ce que la chape (16) comporte deux paires d'oreilles (62,64 ; 62′, 64′) traversées chacune par un perçage (66, 66′) perpendiculaire au plan des disques (12, 14) et en ce que les étriers (42, 42′) comportent chacun une saillie latérale (68, 68′) dotée d'un perçage ou d'une entaille (70) alignée avec les perçages (66, 66′) des oreilles (62, 64 ; 62′, 64′).

5. Frein à disque selon la revendication 4, caractérisé en ce qu'une tige de verrouillage (72, 72′) est engagée dans les perçages (66, 66′) des oreilles (62,64 ; 62′, 64′) de la chape (16) et dans les perçages ou entailles (70) des étriers (42, 42′).

6. Frein à disque selon l'une quelconque des revendications 1 à 5, caractérisé en ce que la chape est une pièce d'un seul tenant et comporte :
- une partie intérieure sensiblement plane (20) s'étendant du côté intérieur du disque intérieur (12),
- trois ponts (22, 24, 26) s'étendant depuis la partie intérieure (20) et chevauchant les disques, successivement un premier pont, dit gauche, (22) chevauchant les deux disques, un deuxième pont, dit central, (24) chevauchant également les deux disques et un troisième pont, dit droit, (26) chevauchant le disque intérieur,
- une partie intermédiaire (28) sensiblement plane s'étendant depuis les trois ponts et descendant dans l'intervalle (D) s'éparant les deux disques (12, 14),
- une partie extérieure sensiblement plane (30) s'étendant depuis les deux premiers ponts (22, 24) et descendant du côté extérieur du disque extérieur (14).

7. Frein à disque selon l'une quelconque des revendications 1 à 6, caractérisé en ce qu'un ressort (84) est maintenu par les tiges de verrouillage (72, 72′), prend appui sur le pont central (24) de la chape (16) et sollicite vers l'axe des disques (12, 14) les extrémités (68, 68′) des étriers (42, 42′) opposées aux colonnettes (56, 56′).

8. Frein à disque selon l'une quelconque des revendications 1 à 7 , caractérisé en ce que la chape comporte des ouvertures (32i, 32e, 32′i, 32′e) de réception des éléments de friction, respectivement deux ouvertures (32i, 32e) de réception des éléments de friction (40i, 40e) du disque intérieur (12), ménagées en vis-à-vis dans la partie intérieure (20) et dans la partie intermédiaire (28A) de la chape entre les deuxième et troisième ponts (24, 26), et deux ouvertures (32′i, 32′e) de réception des éléments de friction (40′i, 40′e) du disque extérieur (14), ménagées en vis-à-vis dans la partie intermédiaire (28) et dans la partie extérieure (30) de la chape entre les premier et deuxième ponts (22, 24).

**Patentansprüche**

1. Scheibenbremse für Kraftfahrzeug, mit einem Paar von drehbaren Scheiben, einer inneren (12) bzw. einer äußeren (14), die aneinander und in einem gegenseitigen festen Abstand (D) befestigt sind, zwei Paaren von Reibungselementen (40i, 40e, 40′i, 40′e), einem äußeren Paar bzw. einem inneren Paar, die dazu vorgesehen sind, mit den einander gegenüberliegenden Seiten der jeweiligen der zwei Scheiben, der äußeren bzw. der inneren, in eine reibschlüssige Verbindung zu gelangen, sowie Träger- und Steuerelementen (16 bzw. 42, 42′), die dazu vorgesehen sind, die Reibungselemente der zwei Paare gegen ihre jeweilige Scheibe zu drücken und das sich ergebende Bremsmoment aufzunehmen, wobei die Bremse eine Trägerabdeckung (16), die sich gleichzeitig entlang der Innenseite der inneren Scheibe (12) im Zwischenraum (D) zwischen den zwei Scheiben und an der Außenseite der äußeren Scheibe (14) erstreckt, einen ersten Einspann-Bremssattel (42), genannt innerer Bremssattel, der mit dem inneren Paar (40i, 40e) von Reibungselementen zusammenwirkt, und einen zweiten Einspann-Bremssattel (42′) umfaßt, genannt äußerer Bremssattel, der mit dem äußeren Paar (40′i, 40′e) von Reibungselementen zusammenwirkt, wobei die zwei Bremssättel (42, 42′) in der Trägerabdeckung (16) verschiebbar angebracht sind, wobei der innere Bremssattel (42) einen Körper (44) in Form eines umgedrehten U aufweist, dessen Basis (46) die innere Scheibe (12) übergreift und einen äußeren Schenkel (48), der im Zwischenraum (D) zwischen den zwei Scheiben (12, 14) nach unten sich erstreckt und mit dem äußeren Reibungselement (40e) des Paars von äußeren Reibungselementen in Kontakt ist, und einen inneren Schenkel aufweist, der auf der Innenseite der inneren Scheibe (12) nach unten sich erstreckt und einen Zylinder (52) bildet, der einen mit dem inneren Reibungselement (40i) des Paars von inneren Reibungselementen in Kontakt befindlichen Kolben (54) aufnimmt, dadurch gekennzeichnet, daß der äußere Bremssattel (42′) einen Körper (44′) in Form eines umgedrehten U aufweist, dessen Basis (46′) die zwei Scheiben (12, 14) übergreift und einen äußeren Flügel (48′), der außerhalb der äußeren Scheibe (14) nach unten sich erstreckt und mit dem äußeren Reibungselement (40′e) des Paars von äußeren Reibungselementen in Kontakt ist, und einen inneren Schenkel (50′) aufweist, der innerhalb der inneren Scheibe (12) nach unten sich erstreckt und einen einen Kolben (54′) aufnehmenden Zylinder (52′) bildet, und daß der Bremssattel (42′) eine Verbindungsstrebe (74) in Form eines umgedrehten U umfaßt, dessen Basis (76) in einem die Umfangslinie der inneren Scheibe (12) von der Basis (46′) des Bremssattels trennenden radialen Zwischenraum (I) die innere Scheibe (12) übergreift und einen inneren Schenkel, der an der inneren Seite der inneren Scheibe (12) nach unten sich erstreckt, um mit dem Kolben (54') in Kontakt zu gelangen, und einen äußeren Schenkel aufweist, der im Zwischenraum (D) zwischen den zwei Scheiben nach unten sich erstreckt, um mit dem inneren Reibungselement (40'i) des Paars von äußeren Reibungselementen in Kontakt zu gelangen.

2. Scheibenbremse gemäß Anspruch 1, dadurch gekennzeichnet, daß im äußeren Schenkel (80) der Verbindungsstrebe (74) ein Aufnahmesitz (100) angeordnet ist, dessen Form zu derjenigen des Reibungselementes (40'i) des Paars von äußeren Reibungselementen komplementär ist.

3. Scheibenbremse gemäß einem der Ansprüche 1 oder 2, dadurch gekennzeichnet, daß die zwei Bremssättel (42, 42') mittels einer Gruppe aus von der Abdeckung (16) getragenen kleinen Stiften (56, 56') und aus von den zwei jeweiligen Bremssätteln (42, 42') getragenen Buchsen (60, 60') in bezug auf die Abdeckung verschiebbar angebracht sind.

4. Scheibenbremse gemäß einem der Ansprüche 1 bis 3, dadurch gekennzeichnet, daß die bedeckung (16) zwei Paare von Ösen (62, 64; 62', 64') aufweist, die jeweils von einer zur Ebene der Scheiben (12, 14) senkrechten Bohrung (66, 66') durchsetzt sind, und daß die Bremssättel (42, 42') jeweils einen seitlichen Vorsprung (68, 68') aufweisen, der mit einer Bohrung oder mit einer mit den Bohrungen (66, 66') der Ösen (62, 64; 62', 64') ausgerichteten Kerbe versehen ist.

5. Scheibenbremse gemäß Anspruch 4, dadurch gekennzeichnet, daß mit den Bohrungen (66, 66') der Ösen (62, 64; 62', 64') der Abdeckung (16) und mit den Bohrungen oder Kerben (70) der Bremssättel (42, 42') eine Verriegelungsstange (72, 72') in Eingriff ist.

6. Scheibenbremse gemäß einem der Ansprüche 1 bis 5, dadurch gekennzeichnet, daß die Abdeckung aus einem einzigen Stück gebildet ist und umfaßt:
– einen im wesentlichen ebenen inneren Teil (20), der sich an der Innenseite der inneren Scheibe (12) erstreckt,
– drei Brücken (22, 24, 26), die sich vom inneren Teil (20) erstrecken und die Scheiben übergreifen, wobei nacheinander eine erste Brücke, genannt linke Brücke (22), die zwei Scheiben übergreift, eine zweite Brücke, genannt mittlere Brücke (24), ebenfalls die zwei Scheiben übergreift und eine dritte Brücke, genannt rechte Brücke (26), die innere Scheibe übergreift,
– einen mittleren Teil (28), der im wesentlichen eben ist und sich von den drei Brücken ausgehend in dem die zwei Scheiben (12, 14) trennenden Zwischenraum (D) nach unten erstreckt, und
– einen äußeren Teil (30), der im wesentlichen eben ist und sich von den zwei ersten Brücken (22, 24) an der Außenseite der äußeren Scheibe (14) nach unten erstreckt.

7. Scheibenbremse gemäß einem der Ansprüche 1 bis 6, dadurch gekennzeichnet, daß von den Verriegelungsstiften (72, 72') eine Feder (84) gehalten wird, die sich an der mittleren Brükke (24) der Abdeckung (16) abstützt und die den kleinen Stiften (56, 56') gegenüberliegenden Enden (68, 68') der Bremssättel (42, 42') in Richtung der Mittelachse der Scheibe (12, 14) belastet.

8. Scheibenbremse gemäß einem der Ansprüche 1 bis 7, dadurch gekennzeichnet, daß die Abdeckung Öffnungen (32i, 32e, 32'i, 32'e) für die Aufnahme der Reibungselemente aufweist, zwei Öffnungen (32i, 32e) für die Aufnahme der Reibungselemente (40i, 40e) der inneren Scheibe (12), die einander gegenüberliegend im inneren Teil (20) und im mittleren Teil (28A) der Abdeckung zwischen der zweiten und der dritten Brücke (24, 26) vorgesehen sind, bzw. zwei Öffnungen (32'i, 32'e) für die Aufnahme der Reibungselemente (40'i, 40'e) der äußeren Scheibe (14), die einander gegenüberliegend im mittleren Teil (28) und im äußeren Teil (30) der Abdeckung zwischen der ersten und der zweiten Brücke (22, 24) vorgesehen sind.

**Claims**

1. A disc brake for a motor vehicle, comprising a pair of rotary discs, respectively an inner (12) and an outer (14), fastened one to the other and with a fixed spacing (D), two pairs of friction elements (40i, 40e, 40'i, 40'e), an outer pair and an inner pair respectively intended for coming into frictional engagement with the opposite faces of the two discs, the outer and the inner respectively, and support (16) and control (42, 42') members intended for laying the friction elements of the two pairs against their respective discs and for absorbing the resulting braking torque, the brake comprising a supporting yoke (16) extending both on the inside of the inner disc (12), in the gap (D) between the two discs, and on the outside of the outer disc (14), a first clamping caliper (42), called an inner caliper, interacting with the inner pair (40i, 40e) of friction elements, and a second clamping caliper (42'), called an outer caliper, interacting with the outer pair (40'i, 40'e) of friction elements, the two calipers (42, 42') being mounted slidably in the supporting yoke (16), the inner caliper (42) comprising a body (44) in the form of an upturned U, the base (46) of which straddles the inner disc (12) and has an outer wing (48) descending into the gap (D) between the two discs (12, 14) and coming into contact with the external friction element (40e) of the pair of internal friction elements, and an inner wing descending on the inner side of the inner disc (12), forming a cylinder (52), receiving a piston (54) in contact with the internal friction element (40i) of the pair of internal friction elements, characterized in that the outer caliper (42') comprising a body (44') in the form of an upturned U, the base (46') of which straddles the two discs (12, 14) and has an outer wing (48′) descending on the outside of the outer disc (14) and comes into contact with the external friction element (40′e) of the pair of external friction elements, and an inner wing (50′) descending on the inside of the inner disc (12), forming a cylinder (52′) receiving a piston (54′), and the caliper (42′) having a spacer (74) in the form of an upturned U, the base (76) of which straddles the inner disc (12) in a radial gap (I) separating the periphery of the inner disc (12) and the base (46′) of the caliper and having an inner wing descending on the inner side of the inner disc (12) in order to come into contact with the piston (54′), and an outer wing descending in the gap (D) between the two discs in order to come into contact with the internal friction element (40′i) of the pair of external friction elements.

2. The disc brake according to Claim 1, characterized in that a receptacle (100) of a form complementary to that of the friction element (40′i) of the pair of external friction elements is made on the outer wing (80) of the spacer (74).

3. The disc brake according to one of Claims 1 or 2, characterized in that the two calipers (42, 42′) are mounted slidably relative to the yoke by means of an assembly with columns (56, 56′) carried by the yoke ( 16 ) and with bushes ( 60, 60') carried by the two calipers (42, 42′) respectively.

4. The disc brake according to anyone of Claims 1 to 3, characterized in that the yoke (16) has two pairs of lugs (62, 64; 62′, 64′), through each of which passes a bore (66, 66′) perpendicualr relative to the plane of the discs (12, 14), and in that the calipers (42, 42′) each have a lateral projection (68, 68′) equipped with a bore or with a notch (70) aligned with the bores (66, 66′) of the lugs (62, 64; 62′ 64′).

5. The disc brake according to Claim 4, characterized in that a locking rod (72, 72′) is engaged in the bores (66, 66′) of the lugs (62, 64; 62′ 64′) of the yoke (16) and in the bores or notches (70) of the calipers (42, 42′).

6. The disc brake according to Claim 1, characterized in that the yoke is in one piece and comprises:
  – a substantially plane inner part (20) extending on the inside of the inner disc (12),
  – three bridges (22, 24, 26) extending from the inner part (20) and straddling the discs, in succession a first bridge, called the left (22), straddling the two discs, a second bridge, called the central (24), likewise straddling the two discs, and a third bridge, called the right (26), straddling the inner disc,
  – a substantially plane intermediate part (28) extending from the three bridges and descending in the gap (D) separating the two discs (12, 14),
  – a substantially plane outer part (30) extending from the first two bridges (22, 24) and descending on the outside of the outer disc (14).

7. The disc brake according to anyone of Claims 1 to 6, characterized in that a spring (84) is held by the locking rods (72, 72′), bears on the central bridge (24) of the yoke (16) and stresses the ends (68, 68′) of the calipers (42, 42′) opposite the columns (56, 56′) towards the axis of the discs (12, 14).

8. The disc brake according to anyone of Claims 1 to 7, characterized in that the yoke has orifices (32i, 32e; 32′i, 32′e) for receiving the friction elements, respectively two orifices (32i, 32e) for receiving the friction elements (40i, 40e) of the inner disc (12) and formed opposite one another in the inner part (20) and in the intermediate part (28A) of the yoke between the second and third bridges (24, 26), and two orifices (32i, 32e) for receiving the friction elements (40′i, 40′e) of the outer disc (14) and formed opposite one another in the intermediate part (28) and in the outer part (30) of the yoke between the first and second bridges (22, 24).

Fig-1

Fig.2

Fig.3

Fig. 4

12

Fig.5

Fig.6